# EUROPEAN PATENT APPLICATION

(11) **EP 4 495 199 A1**
(43) Date of publication of application: **22.01.2025**
(21) Application number: 23766979.1
(22) Date of filing: 10.03.2023
(51) Int. Cl.: C09J 7/30, C09J 7/25, C09J 123/06, C09J 123/12, C09J 123/36, C09J 125/08

(54) **ADHESIVE FILM AND METHOD FOR PRODUCING ADHESIVE FILM**

(30) Priority: 11.03.2022 JP 2022038048
(71) Applicant: Fujimori Kogyo Co., Ltd., Tokyo 112-0002 (JP)
(72) Inventor: TAKEI Kunihiro, Tokyo 112-0002 (JP); YOSHIKAWA Yuiko, Tokyo 112-0002 (JP); TAKEYAMA Shunsuke, Tokyo 112-0002 (JP)
(74) Representative: Lavoix
(86) International application number: PCT/JP2023/009402
(87) International publication number: WO 2023/171803

(57) **Abstract**

An adhesive film (10) has an adhesive layer (12) on at least one surface of a heat-resistant layer (11), wherein the heat-resistant layer (11) contains a thermoplastic resin having an aromatic ring in a monomer unit as an essential component, the heat-resistant layer (11) has a load deflection temperature of 100°C or higher, and the adhesive layer (12) contains an imine-modified polyolefin resin or a modified polyolefin resin having a carbodiimide group as an essential component.

## Description

### TECHNICAL FIELD

The present invention relates to an adhesive film and a method for producing an adhesive film.

Priority is claimed on Japanese Patent Application No. 2022-038048, filed March 11, 2022, the content of which is incorporated herein by reference.

### BACKGROUND ART

For example, a polyimide is known as a material having high heat resistance. For example, Patent Document 1 describes an adhesive tape for electronic components in which a base material and adhesive layers on both surfaces are formed of a specific polyimide. In addition, paragraphs 0110 to 0111 in Patent Document 1 describe that the adhesive tape of the example is adhered to a metal heat sink by performing heating for 1 second, and then adhered to a lead frame by performing heating for 1 second, additionally a silver paste is cured for 2 hours, a semiconductor chip is adhered, and a semiconductor package is assembled.

### [Citation List]

### [Patent Document]

[Patent Document 1]
Japanese Patent No. 3839887

### SUMMARY OF INVENTION

### Technical Problem

Adhesive films that are heated to high temperatures and perform adhesion are required to have adhesion with respect to an adherend and dimensional maintenance of the adhesive film. In the invention described in Patent Document 1, it is described that the adhesive film is used as a thermoplastic adhesive (paragraph 0029), and has high heat resistance and adhesion (paragraph 0118). However, in the invention described in Patent Document 1, since it is necessary to use a special polyimide for a base material and an adhesive layer, the adhesive film becomes expensive.

The present invention has been made in view of the above circumstances, and an object of the present invention is to provide an adhesive film that can achieve both adhesion with respect to an adherend and dimensional maintenance of the adhesive film both at room temperature and high temperatures, and a method for producing an adhesive film.

### Solution to Problem

In order to achieve the above object, the present invention provides an adhesive film having an adhesive layer on at least one surface of a heat-resistant layer, wherein the heat-resistant layer contains a thermoplastic resin having an aromatic ring in a monomer unit as an essential component, wherein the heat-resistant layer has a load deflection temperature of 100°C or higher, and wherein the adhesive layer contains an imine-modified polyolefin resin or a modified polyolefin resin having a carbodiimide group as an essential component.

The adhesive layer may contain at least one resin having a styrene structure or a cyclic hydrocarbon structure.

The adhesive layer may contain a modified polyolefin resin modified with an unsaturated carboxylic acid component.

100 parts by weight of the heat-resistant layer may contain a range of 1 to 30 parts by weight of a thermoplastic resin other than the thermoplastic resin having an aromatic ring in a monomer unit.

The modified polyolefin resin may be a modified polyethylene resin or a modified polypropylene resin.

100 parts by weight of the adhesive layer may contain a range of 1 to 30 parts by weight of a thermoplastic elastomer resin.

A second adhesive layer to be adhered to an adherend of the adhesive film may be provided on the adhesive layer.

In addition, the present invention provides a method for producing the adhesive film, including a process of melt-kneading the material of the heat-resistant layer using a melt extruder and forming the heat-resistant layer into a film by extrusion molding, and a process of melt-kneading the material of the adhesive layer using a melt extruder and laminating the adhesive layer on at least one surface of the heat-resistant layer by extrusion lamination.

In addition, the present invention provides a method for producing the adhesive film, including a process of melt-kneading the materials of the heat-resistant layer and the adhesive layer using respective extruders and performing extrusion molding at the same time, and forming the heat-resistant layer and the adhesive layer into a film when the adhesive layer is laminated on at least one surface of the heat-resistant layer.

In addition, the present invention provides a method for producing the adhesive film, including a process of melt-kneading the material of the heat-resistant layer using a melt extruder and forming the heat-resistant layer into a film by extrusion molding; a process of melt-kneading the material of the adhesive layer using a melt extruder and forming the adhesive layer into a film by extrusion molding; and a process of laminating the adhesive layer on at least one surface of the heat-resistant layer by performing pressing with a heating roller.

In addition, the present invention provides a method for producing the adhesive film, including a process of melt-kneading the material of the heat-resistant layer using a melt extruder and forming the heat-resistant layer into a film by extrusion molding, and a process of dissolving the material of the adhesive layer in a solvent, applying it onto the heat-resistant layer, drying the solvent, and laminating the adhesive layer.

### ADVANTAGEOUS EFFECTS OF INVENTION

According to the present invention, it is possible to achieve both adhesion with respect to an adherend and dimensional maintenance of the adhesive film both at room temperature and high temperatures.

### BRIEF DESCRIPTION OF DRAWINGS

FIG. 1 is a cross-sectional view showing an adhesive film according to a first embodiment.
FIG. 2 is a cross-sectional view showing an adhesive film according to a second embodiment.
FIG. 3 is a cross-sectional view showing an adhesive film according to a third embodiment.

### DESCRIPTION OF EMBODIMENTS

Hereinafter, the present invention will be described with reference to preferred embodiments.

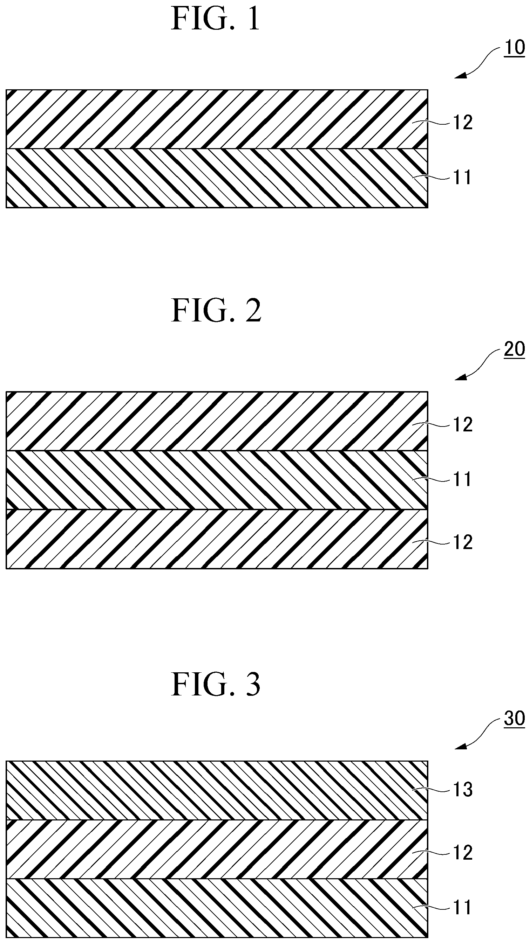

As shown in FIGS. 1 to 3, adhesive films 10, 20, and 30 according to an embodiment have an adhesive layer 12 on at least one surface of a heat-resistant layer 11. Like the adhesive film 10 shown in FIG. 1, the adhesive layer 12 may be provided on one surface of the heat-resistant layer 11. Like the adhesive film 20 shown in FIG. 2, the adhesive layer 12 may be provided on both surfaces of the heat-resistant layer 11. These adhesive layers 12 may be used to adhere the adhesive films 10 and 20 to an adherend (not shown).

Like the adhesive film 30 shown in FIG. 3, a second adhesive layer 13 to be adhered to an adherend may be provided on the adhesive layer 12. The second adhesive layer 13 can be laminated on the adhesive layer 12 on at least one surface of the heat-resistant layer 11. Although not particularly shown, the adhesive layer 12 and the second adhesive layer 13 may be laminated on both surfaces of the heat-resistant layer 11.

The heat-resistant layer 11 contains a thermoplastic resin having an aromatic ring in a monomer unit as an essential component. In the following description, "thermoplastic resins having an aromatic ring in a monomer unit" may be collectively referred to as "aromatic ring-containing thermoplastic resins."

Examples of aromatic ring-containing thermoplastic resins include polyimide (PI) resins, polyphenylene sulfide (PPS) resins, polyphenylene ether (PPE) resins, polyamideimide (PAI) resins, polystyrene (PS) resins, polyester resins, bisphenol type epoxy resins (phenoxy resins), polyether sulfone (PES) resins, polyetheretherketone (PEEK) resins, and polyetherimide (PEI) resins. The aromatic ring-containing thermoplastic resin may be a polymer alloy in which two or more resins are compatible or the like. Examples of polyester resins include polyethylene terephthalate (PET) resins, polybutylene terephthalate (PBT) resins, polyethylene naphthalate (PEN) resins, and liquid crystal polymers (LCP).

Examples of aromatic rings in aromatic ring-containing thermoplastic resins include, but are not particularly limited, a benzene ring, naphthalene ring, anthracene ring, phenanthrene ring, and azulene ring. These aromatic rings may be directly connected with a single bond or the like. For example, when benzene rings are directly connected with a single bond, a biphenyl ring, a terphenyl ring or the like is obtained. The aromatic ring-containing thermoplastic resin may have an aromatic ring in the main chain that is repeated by polymerization of monomers or may have an aromatic ring in the side chain branching from the main chain.

The aromatic ring-containing thermoplastic resin preferably has one or more selected from among an imide bond [(-CO)₂N-], a sulfide bond (-S-), an ether bond (-O-), an amide bond (-NHCO-), an ester bond (-COO-), a sulfone bond (-SO₂-), and a carbonyl group (-CO-) between aromatic rings contained in the monomer unit. In addition, in order to improve the heat resistance in a high-humidity environment, the aromatic ring-containing thermoplastic resin preferably does not contain a bond that is more hydrolyzable or highly thermally decomposable, and for example, preferably does not contain an ester bond. In addition, as the aromatic ring-containing thermoplastic resin, a thermoplastic resin containing no ester bond and also containing no imide bond and/or amide bond may be selected.

An aliphatic chain may be included between aromatic rings in the aromatic ring-containing thermoplastic resin. Specific examples of aliphatic chains include alkylene groups such as a methylene group (-CH₂-), an ethylene group (-CH₂CH₂-), and a trimethylene group (-CH₂CH₂CH₂-), substituted alkylene groups having one or more substitutions with an alkyl group or a hydroxyl group on the alkylene groups, and divalent groups having a functional group such as an ether bond (-O-) or an ester bond (-COO-) at one end or both ends of an unsubstituted or substituted alkylene group. Since aliphatic chains tend to have lower heat resistance than aromatic rings, it is preferable that the number of carbon atoms in the aliphatic chain disposed between aromatic rings be small. For example, the number of carbon atoms in the aliphatic chain may be 3 or less, 2 or less, or 1 or less. An aromatic ring-containing thermoplastic resin having no aliphatic chain between aromatic rings may be used.

The aromatic ring-containing thermoplastic resin is preferably a resin having 1 to 5 aromatic rings in a monomer unit. This prevents the molecular structure of the resin from becoming excessively complex, and makes it relatively easy to obtain. Examples of resins having one aromatic ring in a monomer unit include PI resins, PPS resins, PPE resins, PAI resins, PET resins, PS resins, PEN resins, and LCP. Examples of resins having two aromatic rings in a monomer unit include PI resins, PAI resins, PES resins, and LCP. Examples of resins having three aromatic rings in a monomer unit include PI resins, PEEK resins, and LCP. Examples of resins having five aromatic rings in a monomer unit include PEI resins.

The monomer unit of the aromatic ring-containing thermoplastic resin may be a unit that is repeated by polymerization of monomers. For example, in the case of polymers obtained by polycondensation of polycarboxylic acids and compounds containing other functional groups as seen in polyimide resins, polyester resins and the like, units of polycarboxylic acids and units of compounds containing other functional groups each may be monomer units, or alternatively, units in which units of polycarboxylic acids and units of compounds containing other functional groups are combined may be monomer units. Here, the compound containing other functional groups is a polyamine compound for a polyimide resin and a polyol compound for a polyester resin. Therefore, for example, in a polyimide resin, when a polycarboxylic acid unit has one aromatic ring and a polyamine compound unit has two aromatic rings, a resin in which the monomer unit has three aromatic rings may be used.

The heat-resistant layer 11 preferably has a load deflection temperature (HDT) of 100°C or higher. Thereby, it is possible to improve the heat resistance of the adhesive films 10, 20, and 30. The HDT of the heat-resistant layer 11 can be measured, for example, by a method according to standards such as JIS K 7191, ISO 75, and ASTM D648. The magnitude of the load in HDT measurement is, for example, 1.80 MPa in ISO 75 and JIS K 7191 method A, and 1.82 MPa in ASTM D648 method A.

The value of the load deflection temperature (HDT) can be measured by preparing a test piece regardless of whether it has a single resin layer, a mixed resin layer containing two or more resins, or a resin layer containing components other than the resin. Therefore, it is also possible to measure the HDT of the resin component contained in the heat-resistant layer 11. Since the aromatic ring-containing thermoplastic resin having an HDT of 100°C or higher is a component suitable for imparting heat resistance to the heat-resistant layer 11, it is preferably an essential component of the heat-resistant layer 11. The HDT of the polymer alloy in which two or more resins contained in the heat-resistant layer 11 are compatible may be 100°C or higher.

The heat-resistant layer 11 may contain, as a resin component, only an aromatic ring-containing thermoplastic resin having an HDT of 100°C or higher. The heat-resistant layer 11 may contain a resin component other than the aromatic ring-containing thermoplastic resin. The heat-resistant layer 11 may contain one or more aromatic ring-containing thermoplastic resins in a total amount of 50 wt% or more or 70 to 100 wt%. The heat-resistant layer 11 may be formed of only a heat-resistant layer containing an aromatic ring-containing thermoplastic resin, or formed of a combination of a heat-resistant layer containing an aromatic ring-containing thermoplastic resin and another heat-resistant layer.

A total amount of 100 parts by weight of the heat-resistant layer 11 may contain a range of 1 to 30 parts by weight of a thermoplastic resin other than the aromatic ring-containing thermoplastic resin. The thermoplastic resin other than the aromatic ring-containing thermoplastic resin may be a thermoplastic resin having no aromatic ring in a monomer unit. The HDT of the thermoplastic resin other than the aromatic ring-containing thermoplastic resin may be 100°C or higher or lower than 100°C.

Examples of thermoplastic resins other than the aromatic ring-containing thermoplastic resin include resins obtained by polymerizing monomers having at least one of structures such as ethylene, styrene, and cyclic hydrocarbons. The thermoplastic resin other than the aromatic ring-containing thermoplastic resin may be a resin obtained by copolymerizing at least one monomer selected from among a monomer having an ethylene structure, a monomer having a styrene structure, and a monomer having a cyclic hydrocarbon structure, or a homopolymer of these monomers.

Examples of monomers having an ethylene structure include ethylene, propylene, 1-butene, 1-pentene, 1-hexene, 1-heptene, 1-octene, butadiene, and isoprene. Examples of resins obtained by polymerizing these monomers having an ethylene structure include polyolefins such as polyethylene and polypropylene.

Examples of monomers having a styrene structure include styrene-based monomers such as styrene, methylstyrene, and vinyl toluene. Examples of resins obtained by polymerizing these monomers having a styrene structure include polystyrene and styrene-based elastomers. Examples of styrene-based elastomers include one or more of styrene-ethylene-propylene-styrene block copolymers (SEPS), styrene-ethylene-butylene-styrene block copolymers (SEBS), styrene-butadiene-styrene block copolymers (SBS), styrene-isoprene-styrene block copolymers (SIS), styrene-isoprene-butadiene-styrene block copolymers (SIBS), styrene-ethylene-butylene-olefin crystal block copolymers (SEBC), and hydrogenated styrene-butadiene rubber (HSBR).

The monomer having a cyclic hydrocarbon structure may be the above monomer having a styrene structure, an aromatic olefin monomer such as indene, or a cyclic olefin monomer. The resin obtained by polymerizing monomers having a cyclic hydrocarbon structure may be, for example, a C5 to C9 petroleum resin, or a C9 petroleum resin. The cyclic olefin monomer is preferably a monomer having at least one norbornene structure. The cyclic olefin monomer may be a hydrocarbon-based monomer or may have a functional group such as an ester group. Examples of resins obtained by polymerizing cyclic olefin monomers include cyclic olefin resins such as cycloolefin polymers (COP) and cycloolefin copolymers (COC).

The adhesive layer 12 contains a modified polyolefin resin as an essential component. The adhesive layer 12 may be a resin layer adjacent to the heat-resistant layer 11. Since the modified polyolefin resin has high adhesion, it becomes an essential component for imparting adhesion to the adhesive layer 12.

The adhesive layer 12 contains at least one of an imine-modified polyolefin resin and a modified polyolefin resin having a carbodiimide group as an essential component.

In the present embodiment, the imine-modified polyolefin resin is preferably obtained by grafting a polyimine compound having a plurality of imino groups to an adhesive polyolefin in the presence of a radical generating agent. In the present embodiment, an imine-modified polypropylene obtained by grafting a polypropylene imine is preferable.

In addition, in the imine-modified polyolefin resin of the present embodiment, the melt flow rate (MFR) measured according to ASTM D1238 under conditions of a temperature of 190°C or 230°C and a load of 2.16 kg is preferably 2 g/10 minutes or more and 25 g/10 minutes or less, more preferably 2.5 g/10 minutes or more and 20 g/10 minutes or less, and still more preferably 2.8 g/10 minutes or more and 18 g/10 minutes or less.

Examples of adhesive polyolefins used in a graft treatment of an imine-modified polyolefin resin include copolymers of polyethylene, polypropylene, poly-1-butene, polyisobutylene, or propylene and ethylene, and copolymers of propylene and olefin-based monomers. Examples of olefin-based monomers to be copolymerized include 1-butene, isobutylene, and 1-hexene. These copolymers may be block copolymers or random copolymers.

Among these, as the adhesive polyolefin, a polypropylene-based resin polymerized using propylene such as a homopolypropylene (propylene homopolymer), a copolymer of propylene and ethylene, and a copolymer of propylene and butene as a raw material is preferable; and a propylene-1-butene copolymer, that is, a polyolefin resin having a methyl group and an ethyl group in the side chains is particularly preferable.

As the polyimine compound used in a graft treatment of an imine-modified polyolefin resin, for example, a compound represented by the following Formula (1) is preferable.

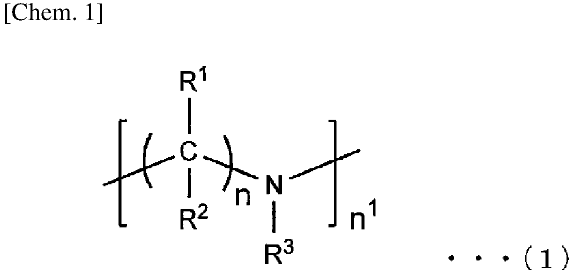

[in Formula (1), R¹, R², and R³ may be the same as or different from each other, and each represent a non-reactive atom or an organic group, and R¹ and R² may be bonded to each other to form a ring; and n is an integer of 1 or more, and n¹ represents an integer of 20 to 2,000].

In Formula (1), R¹, R², and R³ may be the same as or different from each other, and each are preferably a hydrogen atom, alkyl group, alkenyl group, alkynyl group, cycloalkyl group, aromatic group, heterocyclic group or alkoxy group.

Specific examples of alkyl groups for R¹, R², and R³ include a methyl group, ethyl group, propyl group, butyl group, pentyl group, isopropyl group, and isobutyl group, and an alkyl group having 1 to 10 carbon atoms is preferable, an alkyl group having 1 to 8 carbon atoms is more preferable, an alkyl group having 1 to 5 carbon atoms is still more preferable, and an alkyl group having 1 to 3 carbon atoms is particularly preferable.

Specific examples of alkenyl groups for R¹, R², and R³ include a vinyl group, 1-propenyl group, allyl group, and butenyl group, and an alkenyl group having 2 to 10 carbon atoms is preferable, an alkenyl group having 2 to 8 carbon atoms is more preferable, an alkenyl group having 2 to 5 carbon atoms is still more preferable, and an alkenyl group having 2 to 4 carbon atoms is particularly preferable.

Specific examples of alkynyl groups for R¹, R², and R³ include an ethynyl group, 1-propynyl group, and 1-heptynyl group, and an alkynyl group having 2 to 18 carbon atoms is preferable, an alkynyl group having 2 to 10 carbon atoms is more preferable, an alkynyl group having 2 to 6 carbon atoms is still more preferable, and an alkynyl group having 2 to 4 carbon atoms is particularly preferable.

Specific examples of cycloalkyl groups for R¹, R², and R³ include a cyclopropyl group, cyclobutyl group, cyclopentyl group, cyclohexyl group, and cyclooctyl group, and a cycloalkyl group having 3 to 10 carbon atoms is preferable, a cycloalkyl group having 3 to 6 carbon atoms is more preferable, and a cycloalkyl group having 5 to 6 carbon atoms is particularly preferable.

Specific examples of aromatic groups for R¹, R², and R³ include aryl groups such as a phenyl group, a tolyl group, and a naphthyl group, and aralkyl groups such as a benzyl group, and an aryl group having 6 to 10 carbon atoms and an aralkyl group having 7 to 10 carbon atoms are preferable.

Examples of heterocyclic groups for R¹, R², and R³ include five-membered rings such as a furan ring, an oxazole ring, an isoxazole ring, and a tetrahydrofuran ring, six-membered rings such as a pyran ring, heterocyclic rings containing an oxygen atom as a heteroatom, represented by condensed rings such as a benzofuran ring, an isobenzofuran ring, a dibenzofuran ring, a xanthone ring, a xanthene ring, a chroman ring, an isochroman ring, and a chromene ring, or for example, heterocyclic rings containing a sulfur atom as a heteroatom, represented by a thiophene ring, a thiazole ring, an isothiazole ring, a thiadiazole ring, and a benzothiophene ring, and additionally, for example, five-membered rings such as a pyrrole ring, a pyrazole ring, an imidazole ring, a triazole ring, and a pyrrolidine ring, six-membered rings such as a pyridine ring, a pyridazine ring, a pyrimidine ring, a pyrazine ring, a piperidine ring, and a morpholine ring, and heterocyclic rings containing a nitrogen atom as a heteroatom, represented by condensed rings such as an indole ring, an indolizine ring, an isoindole ring, an indazole ring, an indoline ring, an isoindoline ring, a quinolone ring, an isoquinoline ring, a quinolizine ring, a cinnoline ring, a quinoxaline ring, a quinazoline ring, a phthalazine ring, a purine ring, a carbazole ring, an acridine ring, a naphthoquinoline ring, a phenanthridine ring, a phenanthroline ring, a naphthyridine ring, a benzoquinoline ring, a phenoxazine ring, a phthalocyanine ring, and an anthracocyanine ring.

Specific examples of alkoxy groups for R¹, R², and R³ include a methoxy group, an ethoxy group, a propoxy group, and an isopropoxy group, and an alkoxy group having 1 to 10 carbon atoms is preferable, and an alkoxy group having 1 to 6 carbon atoms is more preferable.

In Formula (1), n is preferably 1 to 10.

Preferable specific examples of polyimine compounds include, for example, polyethyleneimines and polypropylene imines.

The molecular weight of the polyimine compound is preferably 1,000 or more, but in consideration of reactivity with olefin after the activation treatment, a higher molecular weight is preferable. Specifically, the molecular weight of the polyimine compound is preferably 1,000 to 200,000, more preferably 3,000 to 200,000, and particularly preferably 15,000 to 200,000.

As the radical generating agent used in a graft treatment of an imine-modified polyolefin resin, organic peroxides, organic peresters, and azo compounds are preferable. Specific examples of organic peroxides and organic peresters include benzoyl peroxide, dichlorbenzoyl peroxide, dicumyl peroxide, di-tert-butyl peroxide, 2,5-dimethyl-2,5-di(peroxide benzoate)hexyne-3,1,4-bis(tert-butylperoxyisopropyl)benzene, lauroyl peroxide, tert-butyl peracetate, 2,5-dimethyl-2,5-di(tert-butylperoxy)hexyne-3,2,5-dimethyl-2,5-di(tert-butylperoxy)hexane, tert-butyl perbenzoate, tert-butyl perphenylacetate, tert-butylperisobutyrate, tert-butylper-sec-octoate, tert-butyl peroxypivalate, cumyl pivalate, and tert-butylperdiethyl acetate. In addition, specific examples of azo compounds include azobisisobutyronitrile and dimethyl azoisobutyrate. Among these, dialkyl peroxides such as dicumyl peroxide, di-tert-butyl peroxide, 2,5-dimethyl-2,5-di(tert-butylperoxy)hexyne-3,2,5-dimethyl-2,5-di(tert-butylperoxy)hexane, and 1,4-bis(tert-butylperoxyisopropyl)benzene are preferable.

Among these, as the radical generating agent, an organic peroxide is preferable. As the organic peroxide, one having a half-life period for the decomposition temperature of 100°C or higher is preferable. In addition, specifically, the organic peroxide is preferably at least one selected from the group consisting of dicumyl peroxide, benzoyl peroxide, di-t-butyl peroxide, 2,5-dimethyl-di-(t-butylperoxy)hexane, 2,5-dimethyl-2,5-(t-butylperoxy)hexane-3, lauroyl peroxide, and t-butyl peroxybenzoate.

The proportion of the radical generating agent used is generally 0.001 to 1 part by mass with respect to 100 parts by mass of the polyolefin used in a graft treatment of an imine-modified polyolefin resin.

The above imine-modified polyolefin resin can be produced by uniformly mixing a polyolefin, a polyimine compound, and a radical generating agent and performing a graft treatment. Specific examples thereof include a melt-kneading method using an extruder, a Banbury mixer, or a kneader, a solution method of performing dissolution in an appropriate solvent, a slurry method of performing suspension in an appropriate solvent, and a so-called gas phase grafting method. The temperature during the graft treatment is appropriately selected in consideration of deterioration of polyolefin, decomposition of a polyimine compound, a decomposition temperature of a radical generating agent to be used, and the like. For example, the melt-kneading method is generally performed at a temperature of 60 to 350°C. The temperature during the graft treatment is preferably 190 to 350°C, and more preferably 200 to 300°C.

The modified polyolefin resin having a carbodiimide group is preferably obtained by reacting a polyolefin having a group that reacts with a carbodiimide group with a carbodiimide group-containing compound in the presence of an unmodified polyolefin. Examples of methods of reacting a carbodiimide group-containing compound include a method of performing melt-kneading at a temperature of 230°C or higher.

Examples of polyolefins having a group that reacts with a carbodiimide group include polymers in which a group that reacts with a carbodiimide group is introduced into a homopolymer or copolymer of ethylene, propylene, 1-butene, 4-methyl-1-pentene, 3-methyl-1-butene, 1-hexene, 1-octene, tetracyclododecene, and norbornene.

Examples of compounds having a group that reacts with a carbodiimide group include unsaturated carboxylic acids such as acrylic acid, methacrylic acid, maleic acid, fumaric acid, tetrahydrophthalic acid, itaconic acid, citraconic acid, crotonic acid, isocrotonic acid, norbornene dicarboxylic acid, and bicyclo[2,2,1]hept-2-ene-5,6-dicarboxylic acid, and their acid anhydrides or derivatives (for example, acid halides, amides, imides, esters, etc.). Among these, maleic anhydride, (meth)acrylic acid, itaconic anhydride, citraconic anhydride, tetrahydrophthalic anhydride, bicyclo[2,2,1]hept-2-ene-5,6-dicarboxylic acid anhydride, hydroxyethyl (meth)acrylate, glycidyl methacrylate, and aminopropyl methacrylate are preferable.

As a method of introducing a compound having a group that reacts with a carbodiimide group into a polyolefin, a well-known method can be used, and examples thereof include a method of graft-copolymerizing a compound having a group that reacts with a carbodiimide group onto a polyolefin main chain, and a method of radical-copolymerizing an olefin and a compound having a group that reacts with a carbodiimide group.

As the polyolefin having a group that reacts with a carbodiimide group, maleic anhydride graft copolymers of crystalline polyolefins such as polyethylene, polypropylene, polybutene-1, poly-4-methylpentene-1 and α-olefin copolymers are preferable, and polyethylene maleic anhydride graft copolymers are more preferable. Particularly, a polyethylene maleic anhydride graft copolymer having a density of 0.915 g/cm³ or more is preferable.

The carbodiimide group-containing compound is preferably a polycarbodiimide having a repeating unit represented by the following Formula (2).

-N=C=N-R⁴ - ··· (2)

(in Formula (2), R⁴ represents a divalent organic group having 2 to 40 carbon atoms)

Examples of R⁴ in Formula (2) include aliphatic hydrocarbon groups such as an alkylene group, alicyclic hydrocarbon groups such as a cycloalkylene group, aromatic hydrocarbon groups such as a phenylene group, and groups in which these hydrocarbon groups are combined with functional groups such as an ether bond (-O-), a carbonyl group (-CO-), an ester bond (-COO-), an amide bond (-NHCO-), and a sulfone bond (-SO₂-). R⁴ may be a residue obtained by removing an isocyanate group (-NCO) from a diisocyanate compound represented by the general formula OCN-R⁴-NCO.

Polycarbodiimides can be produced by subjecting organic diisocyanates such as aliphatic diisocyanates, aromatic diisocyanates, and alicyclic diisocyanates to a decarboxylation condensation reaction in the presence of a condensation catalyst without a solvent or in an inert solvent. For example, diisocyanates such as hexamethylene diisocyanate, 4,4-diphenylmethane diisocyanate, 1,4-phenylene diisocyanate, 2,4-tolylene diisocyanate, xylylene diisocyanate, cyclohexane-1,4-diisocyanate, dicyclohexylmethane-4,4'-diisocyanate, and isophorone diisocyanate can be used.

Examples of unmodified polyolefins used in production of modified polyolefin resins having a carbodiimide group include cyclic polyolefins such as low-density polyethylene, high-density polyethylene, linear low-density polyethylene, polypropylene, ethylene-propylene copolymers, ethylene-α olefin copolymers, ethylene-propylene copolymers, ethylene-butene copolymers, ethylene-hexene copolymers, ethylene-octene copolymers, polybutene-1, poly-4-methyl-1-pentene, poly-3-methyl-1-butene, and ethylene-tetracyclododecene copolymers.

In addition, the adhesive layer 12 may contain a modified polyolefin resin other than the imine-modified polyolefin resin or the modified polyolefin resin having a carbodiimide group. Examples of other modified polyolefin resins include one or more of acid-modified polyolefin resins, hydroxy-modified polyolefin resins, and chlorinated polyolefin resins. Among these, an acid-modified polyolefin resin modified with an unsaturated carboxylic acid component is preferable. The acid-modified polyolefin resin of the adhesive layer 12 preferably contains an unsaturated carboxylic acid component in a proportion of 0.01 to 2 parts by weight with respect to 100 parts by weight of the acid-modified polyolefin resin.

The unsaturated carboxylic acid component may be a carboxy group-containing monomer having a free carboxylic acid group or an acid anhydride group-containing monomer having a latent carboxylic acid group. Examples of carboxy group-containing monomers include α,β-unsaturated carboxylic acid monomers such as acrylic acid, methacrylic acid, maleic acid, nadic acid, fumaric acid, itaconic acid, citraconic acid, crotonic acid, isocrotonic acid, tetrahydrophthalic acid, and endo-bicyclo[2.2.1]-5-heptene-2,3-dicarboxylic acid (endic acid). Examples of acid anhydride group-containing monomers include unsaturated dicarboxylic anhydride monomers such as maleic anhydride, nadic anhydride, itaconic anhydride, citraconic anhydride, and endic anhydride. The modified polyolefin resin may be a resin obtained by copolymerizing one unsaturated carboxylic acid component or a resin obtained by copolymerizing two or more unsaturated carboxylic acid components.

Examples of methods for producing other modified polyolefin resins include a method for graft-modifying an unmodified polyolefin resin with a functional group-containing monomer by melt-kneading and a method for copolymerizing olefin monomers and functional group-containing monomers. The functional group-containing monomer is a monomer having a polar functional group other than olefins, and examples thereof include unsaturated carboxylic acid components, hydroxy-substituted olefins, and chlorinated olefins. As at least one other modified polyolefin resin, an acid-modified polyolefin resin obtained by graft-modification of an unsaturated carboxylic acid component using a radical polymerization initiator can be used. Examples of radical polymerization initiators include organic peroxides and aliphatic azo compounds.

Examples of olefin monomers used in other modified polyolefin resins include one or more of ethylene, propylene, 1-butene, isobutylene, 1-hexene, 1-octene, and α-olefin. Other modified polyolefin resins may be modified polyethylene resins, modified polypropylene resins, modified poly-1-butene resins, or modified polyisobutylene resins. Examples of unmodified polyolefin resins used for graft-modification of other modified polyolefin resins include random copolymers of polyethylene, polypropylene, poly-1-butene, polyisobutylene, propylene and ethylene or α-olefin, and block copolymers of propylene and ethylene or α-olefin.

The modified polyethylene (PE) resin used in the adhesive layer 12 is preferably a resin obtained by copolymerizing 50 parts by weight or more of ethylene in 100 parts by weight of the modified polyethylene resin. The modified polyethylene resin is copolymerized with a functional group-containing monomer such as an unsaturated carboxylic acid component. In addition, the modified polyethylene resin may be copolymerized with propylene, 1-butene, 1-hexene, 1-octene or the like as olefin monomers other than ethylene.

Regarding the adhesive layer 12, a total amount of 100 parts by weight of the adhesive layer 12 may contain 50 to 100 parts by weight of at least one modified polyolefin resin.

In addition, regarding the adhesive layer 12, a total amount of 100 parts by weight of the adhesive layer 12 may contain 50 to 100 parts by weight of at least one of an imine-modified polyolefin resin and a modified polyolefin resin having a carbodiimide group or a sum of 50 to 100 parts by weight of both resins.

In addition, regarding the adhesive layer 12, a total amount of 100 parts by weight of the adhesive layer 12 may contain 3 to 50 parts by weight of the acid-modified polyolefin resin.

The modified polypropylene (PP) resin used in the adhesive layer 12 is preferably a resin obtained by copolymerizing 50 parts by weight or more of propylene in 100 parts by weight of the modified polypropylene resin. The modified polypropylene resin is copolymerized with a functional group-containing monomer such as an unsaturated carboxylic acid component. In addition, the modified polypropylene resin may be copolymerized with ethylene, 1-butene, 1-hexene, 1-octene or the like as olefin monomers other than propylene.

In the adhesive layer 12, in addition to the modified polyolefin resin, at least one resin having a styrene structure or a cyclic hydrocarbon structure may be used as an optional component. Thereby, it is possible to improve adhesion between the heat-resistant layer 11 and the adhesive layer 12. Regarding the adhesive layer 12, a total amount of 100 parts by weight of the adhesive layer 12 may contain 3 to 50 parts by weight of at least one resin having a styrene structure or a cyclic hydrocarbon structure.

Examples of resins having a styrene structure include copolymers of monomers having a styrene structure and other monomers. Examples of monomers having a styrene structure include styrene-based monomers such as styrene, methylstyrene, and vinyl toluene. Examples of monomers other than styrene-based monomers include aliphatic olefins such as ethylene, propylene, α-olefin, butadiene, and isoprene. The resin having a styrene structure may be a resin in which unsaturated bonds remaining after polymerization are reduced or saturated by hydrogenation. The resin having a styrene structure may be a styrene-based elastomer. The proportion of the styrene-based monomer in the resin having a styrene structure may be, for example, 10 to 50 wt%.

Examples of styrene-based elastomers used in the adhesive layer 12 include one or more of styrene-ethylene-propylene-styrene block copolymers (SEPS), styrene-ethylene-butylene-styrene block copolymers (SEBS), styrene-butadiene-styrene block copolymers (SBS), styrene-isoprene-styrene block copolymers (SIS), styrene-isoprene-butadiene-styrene block copolymers (SIBS), styrene-ethylene-butylene-olefin crystal block copolymers (SEBC), and hydrogenated styrene-butadiene rubber (HSBR). In the styrene-based elastomer, blocks containing styrene constitute hard blocks, and blocks containing aliphatic olefins constitute soft blocks.

Examples of resins having a cyclic hydrocarbon structure include copolymers of monomers having a cyclic hydrocarbon structure and other monomers. The monomer having a cyclic hydrocarbon structure may be a monomer having a styrene structure, a monomer having a norbornene structure, or a monomer having an alicyclic hydrocarbon structure or an aromatic hydrocarbon structure. Examples of monomers having a cyclic hydrocarbon structure other than the styrene structure and the norbornene structure include indene, allylbenzene, and cycloolefin. Examples of other monomers having no cyclic hydrocarbon structure include aliphatic olefins such as ethylene, propylene, α-olefin, butadiene, and isoprene.

At least one resin having a cyclic hydrocarbon structure may be a resin having a styrene structure. The resin having a cyclic hydrocarbon structure may be a resin having no styrene structure. At least one resin having a cyclic hydrocarbon structure may be a cyclic olefin resin. The resin having a cyclic hydrocarbon structure may not contain a cyclic olefin resin. The resin having a cyclic hydrocarbon structure may be, for example, a C5 to C9 petroleum resin or a C9 petroleum resin.

The adhesive layer 12 may contain a thermoplastic elastomer resin. The thermoplastic elastomer resin may be a styrene-based elastomer that also serves as the above resin having a styrene structure. The thermoplastic elastomer resin may be a resin different from the above resin having a styrene structure and resin having a cyclic hydrocarbon structure. For example, the thermoplastic elastomer resin may be an olefin-based elastomer. Examples of olefin-based copolymers that can be used for olefin-based elastomers include aliphatic olefin copolymers such as propylene-ethylene copolymers, ethylene-1-butene copolymers, ethylene-1-hexene copolymers, ethylene-1-octene copolymers, propylene-ethylene-1-butene copolymers, and propylene-1-butene copolymers. A total amount of 100 parts by weight of the adhesive layer 12 may contain a range of 1 to 30 parts by weight of the thermoplastic elastomer resin.

When the second adhesive layer 13 is laminated on the adhesive layer 12, a desired adhesive resin can be used for the second adhesive layer 13 as long as it can be laminated on the adhesive layer 12. The adhesive resin is not particularly limited, and examples thereof include acid-modified polyolefins, epoxy-based adhesives, and olefin-based heat sealing agents. The second adhesive layer 13 may contain two or more adhesive resins, or may contain a resin component other than the adhesive resin.

Respective layers constituting the adhesive films 10, 20, and 30, that is, the heat-resistant layer 11, the adhesive layer 12, and the second adhesive layer 13, may contain various additives such as an antioxidant, an ultraviolet absorber, an antistatic agent, a lubricant, and an antiblocking agent according to a desired purpose. Any one of the heat-resistant layer 11, the adhesive layer 12, and the second adhesive layer 13 may have a composition that does not contain any one or more of these additives or does not contain any of them.

A method for producing the adhesive films 10, 20, and 30 is not particularly limited, and examples thereof include a method of forming respective layers or laminating respective layers by extrusion molding, inflation molding, heat lamination, extrusion lamination, dry lamination or the like. For example, when the adhesive films 10 and 20 having the heat-resistant layer 11 and the adhesive layer 12 are produced, the heat-resistant layer 11 may be molded first, the adhesive layer 12 may be molded first, or the heat-resistant layer 11 and the adhesive layer 12 may be molded at the same time.

As a first example of the production method, a production method including a process of melt-kneading the material of the heat-resistant layer 11 using a melt extruder and forming the heat-resistant layer 11 into a film by extrusion molding, and a process of melt-kneading the material of the adhesive layer 12 using a melt extruder and laminating the adhesive layer 12 on at least one surface of the heat-resistant layer 11 by extrusion lamination is exemplified. According to the production method of the first example, since the heat-resistant layer 11 has higher heat resistance than the adhesive layer 12, production is easier than when the adhesive layer 12 is molded first and the heat-resistant layer 11 is then subjected to extrusion lamination. In addition, it is easier to adjust the film thickness of each layer and the like in the first example than in the second example to be described below. In addition, in the first example, since the adhesive layer 12 in a molten state is laminated on the heat-resistant layer 11, the adhesion between layers is improved, compared to the third example to be described below

As a second example of the production method, a production method including a process of melt-kneading the materials of the heat-resistant layer 11 and the adhesive layer 12 using respective extruders and performing extrusion molding at the same time, and forming the heat-resistant layer 11 and the adhesive layer 12 into a film when the adhesive layer 12 is laminated on at least one surface of the heat-resistant layer 11 is exemplified. According to the production method of the second example, compared to the above first example and the third example to be described below, extrusion molding is performed in one process, and the time of the operation is shortened. In addition, since the heat-resistant layer 11 and the adhesive layer 12 are laminated in a molten state, the adhesion between layers is improved.

As a third example of the production method, a production method including a process of melt-kneading the material of the heat-resistant layer 11 using a melt extruder and forming the heat-resistant layer 11 into a film by extrusion molding, a process of melt-kneading the material of the adhesive layer 12 using a melt extruder and forming the adhesive layer 12 into a film by extrusion molding, and a process of laminating the adhesive layer 12 on at least one surface of the heat-resistant layer 11 by performing pressing with a heating roller is exemplified. According to the production method of the third example, since the heat-resistant layer 11 and the adhesive layer 12 can be separately molded and, as necessary, laminated in a desired combination, design changing and production management are facilitated. The order of forming the heat-resistant layer 11 into a film and forming the adhesive layer 12 into a film is not particularly limited, and these can be performed simultaneously and concurrently.

As a fourth example of the production method, a production method including a process of melt-kneading the material of the heat-resistant layer 11 using a melt extruder and forming the heat-resistant layer 11 into a film by extrusion molding, and a process of dissolving the material of the adhesive layer 12 in a solvent, applying it onto the heat-resistant layer 11, drying the solvent, and laminating the adhesive layer 12 is exemplified. According to the production method of the fourth example, it is easy to adjust the thickness of the adhesive layer 12, and it is also possible to form the adhesive layer 12 as a thin film even if it is a thin film that is difficult to form by melt extrusion.

When the adhesive layer 12 is provided on both surfaces of the heat-resistant layer 11, the adhesive layers 12 on the surfaces may be laminated on the heat-resistant layer 11 by the same method or may be laminated on the heat-resistant layer 11 by different methods. The adhesive layers 12 on both surfaces may be resin layers having different compositions or thicknesses or may be resin layers having the same composition or thickness. The thicknesses of the heat-resistant layer 11 and the adhesive layer 12 are not particularly limited, and may be, for example, about 1 to 300 µm for each of the heat-resistant layer 11 and the adhesive layer 12. The thicknesses of the adhesive films 10, 20, and 30 are not particularly limited, and are, for example, about 10 to 500 µm.

When the adhesive film 30 having the second adhesive layer 13 is produced, the adhesive layer 12 may be molded earlier than the second adhesive layer 13, the second adhesive layer 13 may be molded earlier than the adhesive layer 12, or the adhesive layer 12 and the second adhesive layer 13 may be molded at the same time. A method of forming the second adhesive layer 13 is not particularly limited, and may be the same as the method of molding the adhesive layer 12, and may be different from the method of molding the adhesive layer 12. In the first example to the third example of the production method described above, the second adhesive layer 13 may be formed in the same manner as in the adhesive layer 12.

The adherends of the adhesive films 10, 20, and 30 are not particularly limited, and examples thereof include various materials such as resins, rubber, metals, glass, and ceramics. Since the adhesive layer 12 contains a modified polyolefin resin as an essential component, it can be suitably adhered even if the adherend is a metal or the like. Examples of metals include, but are not particularly limited, iron, copper, aluminum, stainless steel, chromium, and nickel. The surface of the adherend may be a treated surface that has been subjected to a surface processing treatment such as uneven processing or a chemical conversion treatment.

While the present invention has been described above based on preferred embodiments, the present invention is not limited to the above embodiments, and various modifications can be made without departing from the spirit and scope of the present invention.

### EXAMPLES

Hereinafter, the present invention will be described in detail with reference to examples.

### (Resins used)

The following resins were used for the heat-resistant layer and the adhesive layer. When showing the compositions of the resins in Table 1, the numerical value of the formulation proportion is added as parts by weight in [ ] below the symbol of the following component.

"A-1" is a PPE resin having an HDT of 120°C (a load of 1.8 MPa).
"A-2" is a PPS resin having an HDT of 105°C (a load of 1.8 MPa).
"A-3" is a PPS/PPE resin having an HDT of 151°C (a load of 1.8 MPa).
"A-4" is a PPE/PS resin having an HDT of 158°C (a load of 1.8 MPa).
"A-5" is a PS resin having an HDT of 70°C (a load of 1.8 MPa).
"A-6" is a PP resin having an HDT of 60°C (a load of 1.8 MPa).
"B-1" is an imine-modified PP having a melting point of 140°C and an MFR of 2.5 g/10 minutes (230°C, 2.16 kg).
"B-2" is an acid-modified PP having a melting point of 140°C and an MFR of 9 g/10 minutes (230°C, 2.16 kg).
"B-3" is an acid-modified PE having a melting point of 125°C and an MFR of 1.5 g/10 minutes (190°C, 2.16 kg).

### (Method for producing adhesive film of Examples 1 to 5 and Comparative Examples 1 and 3 to 7)

With the compositions shown in Table 1, the resin for the heat-resistant layer and the resin for the adhesive layer were each melt-kneaded and then extrusion-molded to obtain a heat-resistant layer film and an adhesive layer film. In the adhesive layer of Example 2, pellets were dry-blended using a mixer and then melt-kneaded and extrusion-molded. The obtained heat-resistant layer film and adhesive layer film were made to overlap, heat-compressed using a heating roller at 200°C, and then stored at 105°C for 1 day for annealing (stabilizing) to obtain an adhesive film having a predetermined thickness. In Table 1, the heat lamination method was denoted as "P-1."

### (Method for producing adhesive film of Example 6)

With the composition shown in Table 1, the resin for the heat-resistant layer was melt-kneaded and then extrusion-molded to obtain a heat-resistant layer film. Next, the resin for the adhesive layer was melt-kneaded and then laminated on the heat-resistant layer film by extrusion lamination, and stored at 105°C for 1 day for annealing (stabilizing) to obtain an adhesive film having a predetermined thickness. In Table 1, the extrusion lamination method was denoted as "P-2."

### (Method for producing adhesive film of Example 7 and Comparative Example 2)

With the composition shown in Table 1, the resin for the heat-resistant layer was melt-kneaded at 320°C for 2 minutes, the resin for the adhesive layer was melt-kneaded at 270°C for 2 minutes, the two layers were then coextrusion-molded (multilayer-cast), and stored at 105°C for 1 day for annealing (stabilizing) to obtain an adhesive film having a predetermined thickness. In Table 1, the two-layer coextrusion molding (multilayer casting) method was denoted as "P-3."

### (Method of measuring adhesive strength)

An adhesive film having a heat-resistant layer thickness of 100 µm, an adhesive layer thickness of 150 µm, and a total thickness of 250 µm was used as a sample. An aluminum foil having a thickness of 200 µm was used as an adherend. This was cut into a size of 50 mm×50 mm, the adherend overlapped on the sample and heat-compressed from the side of the adherend under conditions of a temperature of 170°C, a pressure of 0.1 MPa, and a time of 10 sec. In addition, after the sample was cut into a width of 15 mm, using a tensile testing machine (product name: Autograph (registered trademark) AG-X 20 kN, commercially available from Shimadzu Corporation), the adhesive strength of the sample heat-compressed to the adherend was measured by a 180° peeling method under conditions of a speed of 300 mm/min, a width of 15 mm, and a measurement temperature of 23°C or 110°C. In Table 1, when the adhesive strength was less than 1 N/15 mm, it was denoted as "< 1."

### (Method of measuring amount of creep by compression creep test)

An adhesive film having a heat-resistant layer thickness of 80 µm, an adhesive layer thickness of 20 µm, and a total thickness of 100 µm was used as a sample. The sample was cut into a size of 30 mm×30 mm, and 100 pieces overlapped. Using a creep testing machine (product name: CP6-L-250, commercially available from A&D Co., Ltd.), under conditions of a pressure of 2 MPa, a temperature of 100°C, and a time of 10 minutes, when the original thickness was 100%, the percentage reduction in the thickness of the sample was measured. In Table 1, when the thickness reduction was less than 10%, it was denoted as "< 10," and when the thickness reduction was more than 10%, it was denoted as "> 10."

### (Results)

The above results are summarized in Table 1.

**TABLE 1**

| | Heat-resistant layer [formulation proportion] | Adhesive layer [formulation proportion] | | Method | Adhesive strength at 23°C (N/15 mm) | Adhesive strength at 110°C (N/15 mm) | Amount of creep (%) | HDT of heat-resistant layer (°C) |
|---|---|---|---|---|---|---|---|---|
| Example 1 | A-1 [100] | B-1 [100] | - | P-1 | 11 | 8 | <10 | 120 |
| Example 2 | A-1 [100] | B-1 [60] | B-2 [40] | P-1 | 7 | 4 | <10 | 120 |
| Example 3 | A-2 [100] | B-1 [100] | - | P-1 | 3 | 2 | <10 | 105 |
| Example 4 | A-3 [100] | B-1 [100] | - | P-1 | 6 | 5 | <10 | 151 |
| Example 5 | A-4 [100] | B-1 [100] | - | P-1 | 8 | 6 | <10 | 158 |
| Example 6 | A-3 [100] | B-1 [100] | - | P-2 | 5 | 4 | <10 | 151 |
| Example 7 | A-3 [100] | B-1 [100] | - | P-3 | 6 | 4 | <10 | 151 |
| Comparative Example 1 | A-1 [100] | - | B-2 [100] | P-1 | <1 | <1 | - | 120 |
| Comparative Example 2 | A-1 [100] | - | B-2 [100] | P-3 | <1 | <1 | - | 120 |
| Comparative Example 3 | A-3 [100] | - | B-3 [100] | P-1 | <1 | <1 | - | 151 |
| Comparative Example 4 | A-1 [100] | - | B-2 [100] | P-1 | <1 | <1 | - | 120 |
| Comparative Example 5 | A-3 [100] | - | B-3 [100] | P-1 | <1 | <1 | - | 151 |
| Comparative Example 6 | A-5 [100] | B-1 [100] | - | P-1 | - | - | >10 | 70 |
| Comparative Example 7 | A-6 [100] | B-1 [100] | - | P-1 | 15 | <5 | >10 | 60 |

It can be understood that, since the adhesive films of Examples 1 to 7 had a high adhesive strength and a small amount of creep even at high temperatures, it was possible to achieve both adhesion with respect to an adherend and dimensional maintenance of the adhesive film.

The adhesive films of Comparative Examples 1 to 5 had a weak adhesive strength both at room temperature and high temperatures. Therefore, the amount of creep due to compression was not measured.

In the adhesive films of Comparative Examples 6 and 7, since the heat-resistant layer had insufficient heat resistance, the amount of creep due to compression was large.

### INDUSTRIAL APPLICABILITY

According to the present invention, it is possible to achieve both adhesion with respect to an adherend and dimensional maintenance of the adhesive film both at room temperature and high temperatures. Therefore, the present invention is industrially applicable.

### REFERENCE SIGNS LIST

- 10, 20, 30: Adhesive film
- 11: Heat-resistant layer
- 12: Adhesive layer
- 13: Second adhesive layer

## Claims

1. An adhesive film having an adhesive layer on at least one surface of a heat-resistant layer,
wherein the heat-resistant layer contains a thermoplastic resin having an aromatic ring in a monomer unit as an essential component,
wherein the heat-resistant layer has a load deflection temperature of 100°C or higher, and
wherein the adhesive layer contains an imine-modified polyolefin resin or a modified polyolefin resin having a carbodiimide group as an essential component.

2. The adhesive film according to claim 1,
wherein the adhesive layer contains at least one resin having a styrene structure or a cyclic hydrocarbon structure.

3. The adhesive film according to claim 1 or 2,
wherein the adhesive layer contains a modified polyolefin resin modified with an unsaturated carboxylic acid component.

4. The adhesive film according to any one of claims 1 to 3,
wherein 100 parts by weight of the heat-resistant layer contains a range of 1 to 30 parts by weight of a thermoplastic resin other than the thermoplastic resin having an aromatic ring in a monomer unit.

5. The adhesive film according to any one of claims 1 to 4,
wherein the modified polyolefin resin is a modified polyethylene resin or a modified polypropylene resin.

6. The adhesive film according to any one of claims 1 to 5,
wherein 100 parts by weight of the adhesive layer contains a range of 1 to 30 parts by weight of a thermoplastic elastomer resin.

7. The adhesive film according to any one of claims 1 to 6,
wherein a second adhesive layer to be adhered to an adherend of the adhesive film is provided on the adhesive layer.

8. A method for producing the adhesive film according to any one of claims 1 to 7, comprising:
a process of melt-kneading the material of the heat-resistant layer using a melt extruder and forming the heat-resistant layer into a film by extrusion molding; and
a process of melt-kneading the material of the adhesive layer using a melt extruder and laminating the adhesive layer on at least one surface of the heat-resistant layer by extrusion lamination.

9. A method for producing the adhesive film according to any one of claims 1 to 7, comprising
a process of melt-kneading the materials of the heat-resistant layer and the adhesive layer using respective extruders and performing extrusion molding at the same time, and forming the heat-resistant layer and the adhesive layer into a film when the adhesive layer is laminated on at least one surface of the heat-resistant layer.

10. A method for producing the adhesive film according to any one of claims 1 to 7, comprising:
a process of melt-kneading the material of the heat-resistant layer using a melt extruder and forming the heat-resistant layer into a film by extrusion molding;
a process of melt-kneading the material of the adhesive layer using a melt extruder and forming the adhesive layer into a film by extrusion molding; and
a process of laminating the adhesive layer on at least one surface of the heat-resistant layer by performing pressing with a heating roller.

11. A method for producing the adhesive film according to any one of claims 1 to 7, comprising:
a process of melt-kneading the material of the heat-resistant layer using a melt extruder and forming the heat-resistant layer into a film by extrusion molding; and a process of dissolving the material of the adhesive layer in a solvent, applying it onto the
heat-resistant layer, drying the solvent, and laminating the adhesive layer.
